# EUROPEAN PATENT SPECIFICATION

(11) **EP 3 460 240 B1**
(45) Date of publication and mention of the grant of the patent: **02.03.2022**
(21) Application number: 18196153.3
(22) Date of filing: 24.09.2018
(51) Int. Cl.: F03G 7/08

(54) **AN ENERGY GENERATION SYSTEM**
ENERGIEERZEUGUNGSSYSTEM
SYSTÈME DE PRODUCTION D'ÉNERGIE

(30) Priority: 22.09.2017 IE S20170194
(43) Date of publication of application: 27.03.2019
(73) Proprietor: Duffy, Gerard, 16 Dublin (IE)
(72) Inventor: Duffy, Gerard, 16 Dublin (IE)
(74) Representative: FRKelly

(56) References cited:
- DE-A1-102011 116 180
- KR-B1- 101 280 886
- KR-B1- 101 280 886
- US-A1- 2004 130 158
- US-A1- 2009 179 433

## Description

### Field of Invention

The present invention relates to a system for generating energy by converting the weight of a motor vehicle as it passes over the system into electric power, and which may therefore be used to generate electricity at locations which have significant vehicular traffic travelling at slow to moderate speeds, such as the entrance to a carpark or the like.

### Background of Invention

Due to the problems associated with the use of non-renewable energy sources, most notably the now well documented phenomenon of global warming and associated extreme weather events and other detrimental environmental effects, there is now a strong drive towards developing renewable sources of energy in many different areas of industry. One area which has seen significant development is in seeking alternative means of generating electricity, which is one of the most common and therefore heavily utilised forms of energy currently used across the globe. This has lead to the widespread deployment of wind and solar energy systems such as large scale land and marine based wind turbines, commercial and domestic scale photovoltaic and solar water heating systems, and other such systems for converting naturally occurring forms of energy into electricity. There is however a recognition that much more must be done to reduce and potentially eventually eliminate our use of fossil fuels, whose extraction, processing and ultimate combustion generates enormous levels of pollution and damage to the environment..

The transition to renewable energy systems also offers security of supply benefits and economic opportunities as well as improved air quality and health gains for the population. Electricity is expected to play a central but not exclusive role in the transition to a carbon-neutral economy. If total emissions are to be reduced by at least 80 per cent by 2050, it will be necessary to move to close to zero-carbon electricity.

Electricity at present represents around one fifth of energy consumption worldwide. So called "road energy rams" or "road energy systems", which are known in the transportation industry, are a cost effective and versatile method of generating electricity by converting the weight of a moving vehicle into electric power. Such systems generally employ some form of depressible ramp or speed bump type element which is compressed when driven over by a vehicle, pumping hydraulic fluid around a circuit to drive a hydraulic motor and so directly or indirectly generate electricity.

Such road energy rams can be sited at entrances and exits of car parks, transport depots, car ferries, railway tracks, toll booths, airport aprons and many other locations where there is a concentration of passing traffic, travelling at a suitably low speed such that the ramps or bumps do not present a dangerous obstacle.

Due to the ease of assembly, disassembly and deployment of such road energy rams, these systems could also be used on conjunction with convoys-on-the-move such as those of the army or similar large volume convoys. The systems can be retrofitted at the entrance/exit of existing buildings or the like, and can also be manufactured from relatively standard components and are relatively simple in operation, maintenance and repair.

The document US 2004 130158 discloses a system mounted to a road consisting of mechanical means for transferring vehicle driving energy into hydraulic energy.

It is an object of the present invention to provide an improved road energy generation system which is capable of extracting energy in a more discerning and therefore efficient manner from a wider range of vehicles than is presently the case with prior art systems.

### Summary of the Invention

The first aspect of the present invention is specified by the features of the first claim.

Preferably, the load sensor is pressure actuated and has a threshold activation pressure.

Preferably, the load sensor comprises a spring whose spring rate determines the threshold activation pressure.

Preferably, the flow control valve comprises an inlet in fluid communication with the main hydraulic ram; a first outlet in fluid communication with the hydraulic motor; and a second outlet; the flow control valve being actuatable between the first state in which the inlet is in fluid communication with the first outlet and the second state in which the inlet is in fluid communication with the second outlet. Preferably, the system comprises at least first and second hydraulic motors; corresponding first and second flow control valves; and first and second load sensors, the first load sensor having a different threshold activation pressure to the second load sensor; wherein the first flow control valve is actuatable by the first load sensor and the second flow control valve is actuatable by the second load sensor; and wherein the inlet of the second flow control valve is supplied from the first outlet of the first control valve.

Preferably, the inlet of the first flow control valve is supplied from the or each main hydraulic ram.

Preferably, the system comprises a plurality of the main hydraulic rams positioned in series and each in fluid communication with the at least one flow control valve.

Preferably, the or each main hydraulic ram is arranged to be compressed in response to the passage of a vehicle such as to pump hydraulic fluid to the at least one flow control valve.

Preferably, the or each main hydraulic ram is spring biased towards an extended state.

Preferably, the system is arranged to recharge the or each main hydraulic ram with hydraulic fluid as the respective main hydraulic ram returns to an extended state.

Preferably, the system comprises a channel within which the or each main hydraulic ram and at least one flow control valve are at least partially housed.

Preferably, the at least one flow control valve comprises a spool valve.

Preferably, the or each load sensor comprises a secondary hydraulic ram in fluid communication with the spool valve such that hydraulic fluid pressure generated by compression of the secondary hydraulic ram is arranged to displace the spool valve from the first to the second state.

Preferably, the system is arranged to recharge the or each secondary hydraulic ram with hydraulic fluid as the respective secondary hydraulic ram returns to an extended state.

Preferably, the system comprises a reset mechanism actuatable by the passage of the vehicle to return the or each flow control valve to the first state.

Preferably, the system comprises a position sensor located downstream of the at least one main hydraulic ram with respect to the direction of travel of a vehicle.

Preferably, the reset mechanism comprises a remotely controllable release valve operable by the position sensor to release the hydraulic pressure applied by the secondary hydraulic ram to the respective spool valve such as to permit the spool valve to return to the first state.

Preferably, the system comprises a ram assembly adapted to effect compression of the main hydraulic ram and comprising a lever reversibly rotatable about a fulcrum by the passage of a vehicle wheel such as to compress the main hydraulic ram.

Preferably, the lever is biased to return to a neutral state in which the main hydraulic ram is extendable.

Preferably, the lever comprises a first end, an opposed second end, the fulcrum being positioned between the first and second ends such that both the first and second ends of the lever may be rotated about the fulcrum in order to compress the main hydraulic ram.

A second aspect of the present invention is specified by the method as claimed in claim 13.

Preferably, the method comprises passing the vehicle wheel over two or more of the load sensors having different threshold activation pressures; actuating one of two or more flow control valves when one of the threshold activation pressures is sensed; and pumping hydraulic fluid through one or both flow control valves to one of two or more hydraulic motors.

As used herein, the term "connectable" is intended to mean that one element may be place in fluid communication with another element, for example through a valve or the like, in order to allow fluid to be selectively pumped from one element to the other.

As used herein, the term "threshold activation pressure" is intended to mean a pressure below which the respective component or system will not be actuated, for example requiring a downward pressure to be applied which is above a predefined value in order to depress a part of the component or system, for example a ram or the like, to precipitate a further action or event.

As used herein, the term "hydraulic ram" is intended to mean a device which is operable to pump a fluid, in particular but not exclusively oil, through a circuit or the like, and may be actuated linearly or otherwise, and may permit unidirectional or bidirectional flow therethrough, and is particularly intended to mean a telescopic ram comprising a cylinder within which a piston is slidably displaceable via a piston rod, in order to pump pressurised hydraulic fluid from the cylinder via one or more ports.

As used herein, the term "load sensor" is intended to mean a device which may be mechanical, electrical, or a combination, which is operable to monitor and/or measure a force or load applied to the sensor and to generate a signal in response to the load being applied, in particular only generating such a signal when a load above a predefined value is applied to the sensor.

### Brief Description of Drawings

Embodiments of the present invention will now be described with reference to the accompanying drawings, in which:
Figure 1 illustrates a perspective view of a pair of optional channels for housing an energy generation system according to an embodiment of the present invention, with hydraulic circuitry forming part of the energy generation system being partially located therein;
Figure 2 illustrates the pair of channels shown in Figure 1 with the complete energy generation system located therein;
Figure 3 illustrates a schematic plan view of various hydraulic components and circuitry forming part of the energy generation system of the invention;
Figure 4 illustrates an enlarged view of a portion of the arrangement illustrated in Figure 3;
Figure 5 illustrates an enlarged view of an array of spool valves forming part of the hydraulic componentry of the generation system of the invention;
Figure 6 illustrates a schematic sectioned view of the array of spool valves illustrated in Figure 5, in a first configuration;
Figure 7 illustrates the spool valves in a second configuration;
Figure 8 illustrates the spool valves in a third configuration;
Figure 9 illustrates the spool valves in a fourth configuration;
Figure 10 illustrates a sectioned side elevation a vehicle wheel disposed between a pair of adjacent main hydraulic rams forming part of the energy generation system of the invention;
Figure 11 illustrates the arrangement of Figure 10, the vehicle wheel depressing a ram assembly in order to effect depression of the main hydraulic ram housed within the ram assembly;
Figure 12 illustrates an end view of the ram assembly;
Figure 13 illustrates a side elevation of the ram assembly;
Figure 14 illustrates a perspective view of the ram assembly.

### Detailed Description of Drawings

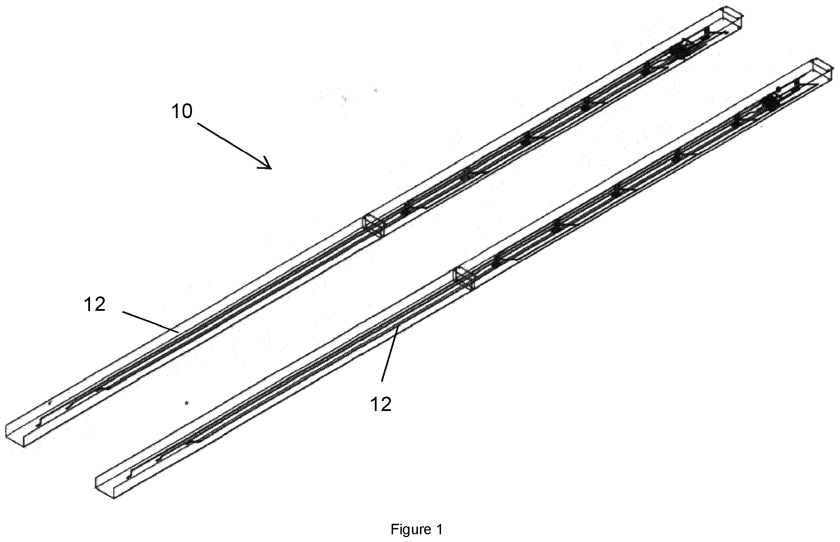

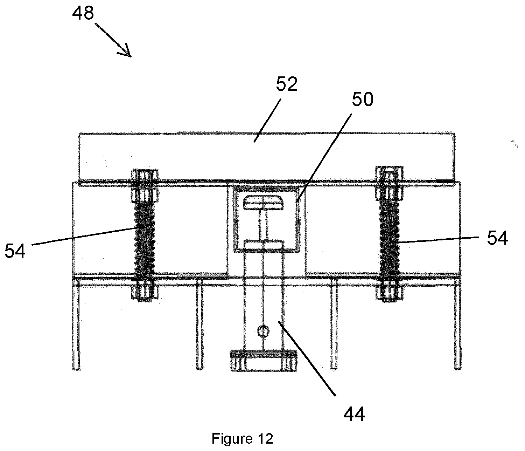

Referring now to Figure 1 to 14 of the accompanying drawings there is illustrated an energy generation system, generally indicated as 10, which is designed to convert the load applied by a passing vehicle (not shown) into energy, preferably electrical energy, by utilising the weight of the vehicle to pump hydraulic fluid around a hydraulic system incorporating a hydraulic motor (not shown) which will generate electricity for local use or otherwise. The system 10 is thus intended to be located in areas which experience high volumes of traffic, for example the entrance or exit to a car park, a tollbooth, or any other suitable location, and is designed as hereinafter described to pump different volumes or pressures of hydraulic fluid depending on the weight range of the passing vehicle, thereby allowing a greater amount of energy to be generated than would otherwise be the case with conventional road energy ram systems which are required to be actuated by a single nominal vehicle weight.

The system 10 comprises various hydraulic components and circuitry which are preferably at least partially housed within a pair of channels 12 which define wheel tracks which are spaced from one another such that a passing vehicle's wheels W will travel along the two sets of tracks 12 each of which contain the full workings of the system 10 as hereinafter described and thus all four wheels of the vehicle are employed in pumping hydraulic fluid and therefore generating electricity. It will however be appreciated that a single track 12 could be employed although this would half the amount of energy generated by the sytem10. It will also be appreciated that the spacing between the tracks 12 may be varied as required to suit the particular vehicles passing. It will also be appreciated that the channels 12 are optional components of the system 10, and that the hydraulic components and circuitry hereinafter described could simply be directly located in the roadway or other surface on which the system 10 is provided. Thus reference hereinafter to one or both channels 12 should be understood to be essentially referring to the components contained therein and not necessarily requiring the actual outer casing or housing as defined by the channel 12 itself.

The energy generation system 10 is adapted, as hereinafter described in detail, to use the differing weights of different sized or loaded vehicles to drive different hydraulic motors efficiently in order to maximise the energy generating capacity of the system 10. The system 10 thereby effectively filters or grades the passing vehicles into two or more different weight categories, and based on that grading then selects one of a plurality of hydraulic motors to be driven in response to the passage of that vehicle, allowing a higher rated motor to be driven by a heavier vehicle, and a lower rated motor to be driven by a lighter vehicle.

In the embodiment illustrated the system 10 is adapted to filter vehicles into four weight ranges, hereinafter referred to as very light vehicles, light vehicles, medium vehicles and heavy vehicles. For very light vehicles the system 10 is design not to be activated and thus not to pump hydraulic fluid as vehicles in this weight range are not heavy enough to generate sufficient pressure in the hydraulic fluid to drive a hydraulic motor of a size which will generate electricity economically. It will be appreciated that the system 10 may be adapted to grade or filter vehicles into a greater or lesser number of weight ranges.

Thus the system 10 is provided with three hydraulic motors (not shown) hereinafter referred to as a high pressure motor, a medium pressure motor and a low pressure motor. Obviously the high pressure motor will generate greater quantities of electricity, but will require a greater hydraulic pressure to drive the motor, and will thus only be utilised when vehicles over a certain threshold weight are detected by the system 10 as hereinafter described.

Similarly the medium pressure hydraulic motor will be most efficiently driven by vehicles over a certain threshold weight but below the threshold weight required for driving the high pressure motor. Lastly, the low pressure motor will be efficiently driven by the fluid pumped in response to vehicles above a certain threshold weight but below the threshold weight of the medium pressure hydraulic motor. In this way the system 10 can filter passing vehicles by weight, and in the embodiment illustrated in three different weight ranges, in order to more efficiently drive the respective motor. Again it will be appreciated that vehicles could be filtered into a greater or lesser number of weight ranges.

The following description covers the arrangement of components contained within a single one of the channels 12, it being understood that both channels 12 contain the same components and operate in identical fashion. It should also be appreciated that the system 10 could be comprised of only a single channel 12 or three or more of the channels 12 in parallel, depending on the type of vehicular traffic that will be driven over the system 10.

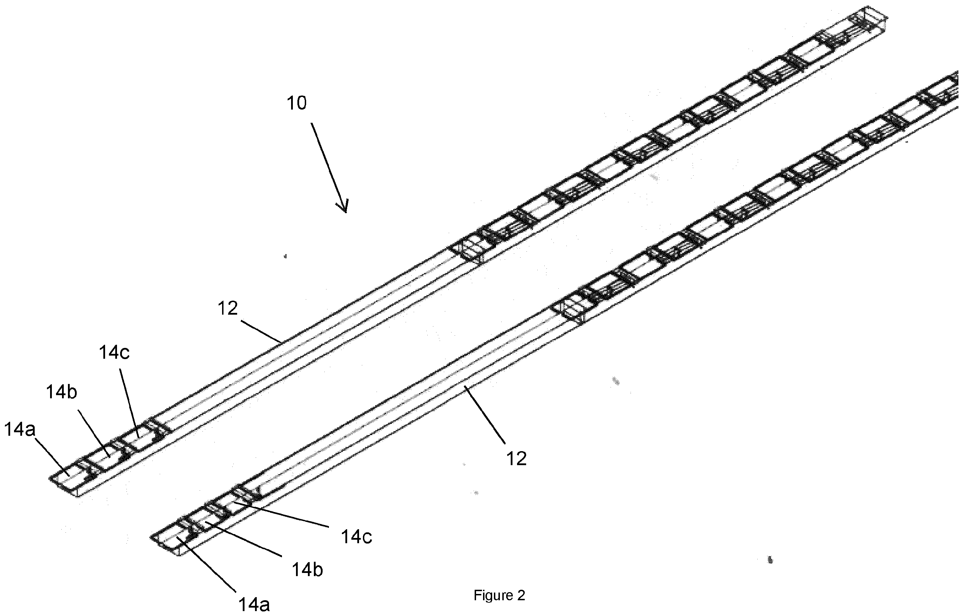

The system 10 comprises first, second and third load sensors 14a, 14b, 14c located at an upstream end of the channel 12 with respect to the direction of travel of a vehicle along the channel 12. In the embodiment described and shown, in particular in Figures 1 and 2, vehicles travel from left to right across the system 10. The load sensors 14a, 14b, 14c each have a different threshold activation pressure, the first load sensor 14a having a higher threshold activation pressure than the second load sensor 14b which has a higher threshold activation pressure than the third load sensor 14c. Thus a light vehicle will not activate the first or second load sensors 14a, 14b but will activate the third load sensor 14c as the vehicle weight is above the threshold activation pressure of the third load sensor 14c, but not above the activation pressure of the first and second load sensors 14a, 14b. A medium weight vehicle will activate the second and third load sensors 14b, 14c but not the first load sensor 14a. A heavy vehicle will activate all three load sensors 14a, 14b, 14c, while a very light vehicle will not activate any of the load sensors 14a, 14b, 14c. In the preferred embodiment illustrated the load sensors 14a, 14b, 14c each comprise an auxiliary hydraulic ram 14a, 14b, 14c positioned and arranged to be depressed by the passage of a vehicle, and spring biased to return to an extended state once the vehicle has passed. In order to achieve the different threshold activation pressures the return spring in the respective ram 14a,14b,14c requires a certain force to be overcome in order to allow compression of the spring and therefore the ram, and this force is selected to provide the desired threshold activation pressure for the respective load sensor 14a, 14b, 14c. It will however be appreciated that any other suitable form of load sensor may be employed which embodies functionality that provides the capability of distinguishing between vehicles of different weights or weight ranges, as hereinbefore described. However while it is envisaged that some form of electronic load sensor (not shown) may be employed, it will be appreciated that due to the continuous impacts experienced by the load sensors 14a, 14b, 14c from the passing vehicles it is preferable, for reliability and longevity, that mechanical/hydraulic based sensors provide a more practical option for the sensors 14a, 14b, 14c.

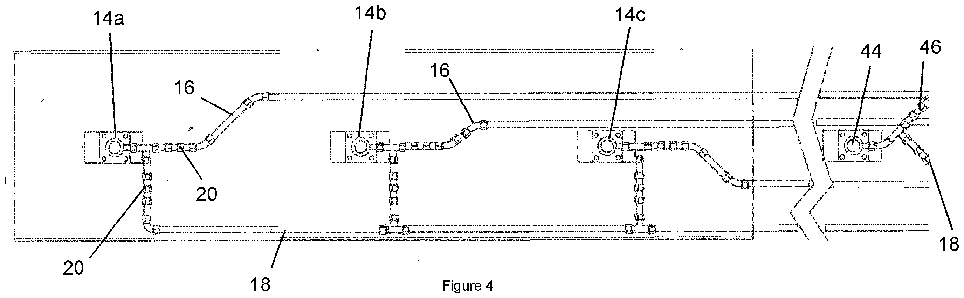

Referring in particular to Figure 4, connected or hydraulically coupled to each of the load sensors 14a, 14b, 14c is a flow conduit 16 from which hydraulic fluid is pumped on compression of the respective ram 14a,14b,14c and a return conduit 18 via which hydraulic fluid can be drawn back into the ram 14a, 14b, 14c as it extends following the passage of a vehicle. One or more non-return valves 20 are located in a suitable orientation on both the flow conduit 16 and the return conduit 18, in order to ensure only unidirectional flow in the conduits 16, 18. The return conduit 18 may be fed from a header tank (not shown), or by fluid returned from the hydraulic motors (not shown), or any other suitable alternative.

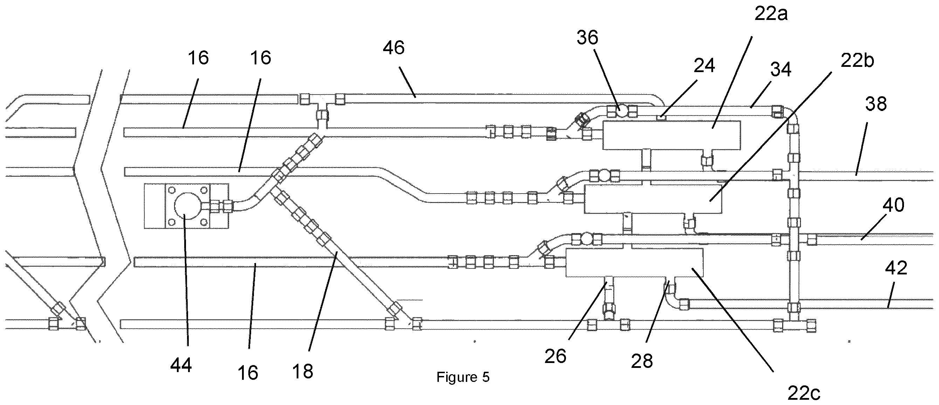

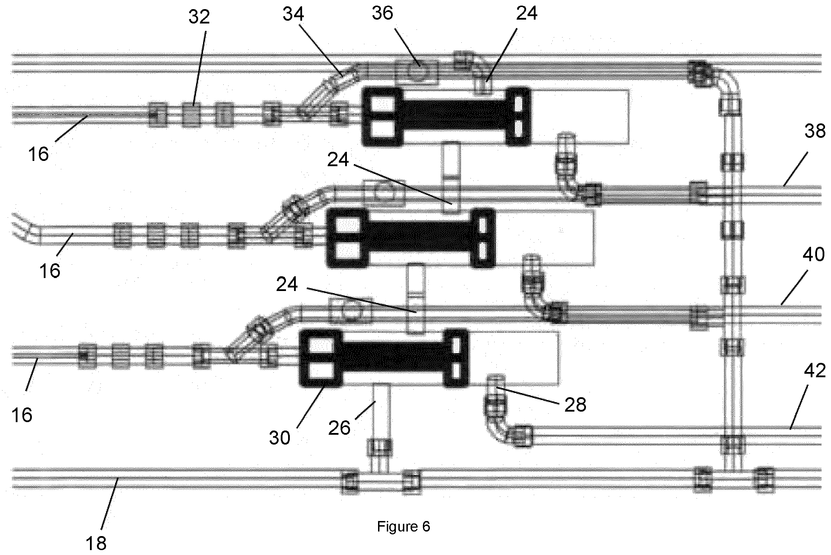

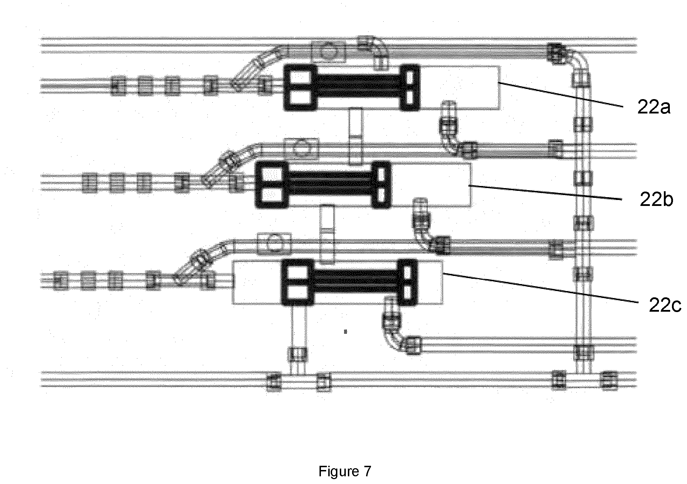

Referring now to Figures 5 and 6, each of the load sensors 14a,14b,14c are connected via the respective flow conduit 16 to a respective flow control valve, which in the embodiment illustrated comprise a first spool valve 22a, a second spool valve 22b and a third spool valve 22c. Each of the spool valves 22a, 22b, 22c comprise a single inlet 24 via which hydraulic fluid can be supplied to the spool valve 22a, 22b, 22c, along with a first outlet 26 and a second outlet 28. Each spool valve 22a, 22b, 22c is actuatable between a first state in which fluid pumped through the inlet 24 exits only the first outlet 26, and a second state in which fluid pumped to the inlet 24 exits only the second outlet 28. Referring to Figure 6 each of the spool valves 22a, 22b, 22c includes a piston or shuttle 30 which is reciprocally displaceable within the spool valve 22a, 22b, 22c to occlude one of the outlets 26, 28 while exposing the other of the two outlets 26, 28. The piston 30 is spring biased to the left hand side of the spool valve 22a, 22b, 22c as illustrated and in this first state exposes the first outlet 26 while occluding the second outlet 28. When the piston 30 is laterally displaced to the right against the action of the spring bias, for example as shown in Figure 7 for the third spool valve 22c, the first outlet 26 is occluded while the second outlet 28 is exposed, thereby allowing fluid to flow from the inlet 24 through the spool valve to the second outlet 28. Thus the spool valves 22a, 22b, 22c are actuatable in order to control the flow of fluid between two paths as defined by the first outlet 26 and the second outlet 28. It will however be appreciated that the spool valves 22a, 22b, 22c could be replaced with any other suitable functional alternative, and for example it is envisaged that a rotary spool valve could be employed for this function.

In order to actuate each of the spool valves 22a, 22b, 22c the flow conduit 16 from the first load sensor 14a is connected into the left hand end of the first spool valve 22a such that pressurised hydraulic fluid pumped from the first load sensor 14a can act against the piston 30 of the first spool valve 22a in order to displace the piston 30 towards the right and thus change the first spool valve 22a from the first state to the second state. Similarly the second load sensor 14b is connected to the second spool valve 22b in order to effect actuation thereof, while the third load sensor 14c is connected to the third spool valve 22c. A non return valve 32 is located on each of the fluid conduits 16 upstream of the respective spool valve 22a, 22b, 22c such that once the spool valve 22a, 22b, 22c has been displaced into the second state it will remain in this state against the spring bias acting on the piston 30 until the fluid pressure is released. In order to release the fluid pressure each flow conduit 16 branches, at a position between the non-return valve 32 and the spool valve 22a, 22b, 22c, into a bypass conduit 34 on which is provided a remotely operable release valve 36 which can be remotely opened to allow the pressure to be released from against the respective piston 30, thereby allowing the respective spool valve 22a, 22b, 22c to return to the first state. Each of the bypass conduits 34 preferably feeds back into the return conduit 18 supplying the load sensors 14a, b, c, although it will be appreciated that they may equally be fed to an alternative location such as a hydraulic fluid header tank (not shown). The timing of the control of the release of valves 36 will be described in detail hereinafter.

The spool valve 22a, 22b, 22c are arranged in cascading order whereby the first outlet 26 of the first spool valve 22a feeds the inlet 24 of the second spool valve 22b and the first outlet 26 of the second spool valve 22b feeds the inlet 24 of the third spool valve 22c. The first outlet 26 of the third spool valve 22c is preferably in fluid communication with the return conduit 18, but again may feed into the above mentioned header tank or any other suitable location. The second outlet 28 of the first spool valve 22a supplies a first motor conduit 38 which is in fluid communication with the first or high pressure hydraulic motor (not shown). Similarly the second outlet 28 of the second spool valve 22b feeds a second motor conduit 40 in order to supply fluid to the second or medium pressure hydraulic motor (not shown), and the second outlet 28 of the third spool valve 22c feeds a third motor conduit 42 which supplies fluid to the third or low pressure hydraulic motor (not shown).

Located downstream of the load sensors 14a, 14b, 14c are at least one, and preferably a linear array of main hydraulic rams 44 arranged in series along the channel 12 such that a passing vehicle (not shown) will sequentially depress each of the main hydraulic rams 44 in order to pump hydraulic fluid therefrom. The main hydraulic rams 44 are arranged, as will be described in detail hereinafter, to be depressed by the passage of a vehicle wheel W, regardless of which weight category the vehicle falls into, and thus each of the main hydraulic rams 44 will be fully depressed by a light, medium or heavy weight vehicle. The main hydraulic rams 44 are spring biased to return to an extended state once the vehicle has passed. A heavier vehicle will however generate a higher pressure in the hydraulic fluid pumped from the main hydraulic ram, a medium weight vehicle generating medium hydraulic pressure and a light weight vehicle generating a low hydraulic pressure within the hydraulic fluid. It will be appreciated that these pressures may vary depending on the design and dimensions of the associated hydraulic components of the system 10 and it is not therefore deemed necessary to list actual pressure ranges, which can be readily determined by a person of ordinary skill in the art.

Referring to Figure 5, in which only a single main hydraulic ram 44 is shown, a supply conduit 46 extends from the main hydraulic ram 44 and feeds the inlet 24 of the first spool valve 22a. The return conduit 18 resupplies the main hydraulic ram 44 with hydraulic fluid, with non return valves 20 again being provided in order to manage the flow of hydraulic fluid to and from the main hydraulic ram 44. Where a plurality of the main hydraulic rams 44 are provided in series each feeds into the common supply conduit 46 and thus all feed their pumped hydraulic fluid solely to the inlet 24 of the first spool valve 22a.

Thus in use a vehicle approaches the system 10 and drives over the load sensors 14a, 14b, 14c. In advance of the passage of the vehicle the release valve 36 associated with each of the spool valves 22a, 22b, 22c is in the closed position. Where the passing vehicle is a light weight vehicle it will not apply the threshold activation pressure to the first and second load sensors 14a and 14b, but will actuate the third load sensor 14c. Thus no fluid will be pumped to the first and second spool valves 22a and 22b which will therefore remain in the first state in which the respective inlet 24 is in fluid communication with the respective first outlet 26. Hydraulic fluid will however be pumped by the third load sensor 14c which will therefore act against the piston 30 of the third spool valve 22c in order to displace the piston 30 such as to occlude the first outlet 26 and expose the second outlet 28. The non-return valve 32 associated with the third spool valve 22c will ensure that the piston 30 remains in this position despite the action of the biasing spring seeking to urge the piston 30 back to the first state, once the vehicle has passed over the third load sensor 14c. Figure 6 illustrates the arrangement of the spool valves 22a, 22b, 22c prior to the advance of a vehicle over the load sensors 14a, 14b, 14c, while Figure 7 illustrates the arrangement of spool valves 22a, 22b, 22c following the passage of the light vehicle over the load sensors 14a, 14b, 14c.

The advancing light vehicle will then arrive at and pass over the one or more main hydraulic rams 44, depressing each and pumping hydraulic fluid through the supply conduit 46 to feed the inlet 24 of the first spool valve 22a. As the first spool valve 22a is in the first state the hydraulic fluid will pass through the spool valve 22a to the first outlet 26, which connects with the inlet 24 of the second spool valve 22b. Again as the second spool valve 22b has not been displaced into the second state the hydraulic fluid will pass from the inlet 24 to the first outlet 26 which supplies the inlet 24 of the third spool valve 22c. The third spool valve 22c has however been actuated into the second state and thus the hydraulic fluid pumped from the one or more main hydraulic rams will exit the second outlet 28 at the third spool valve 22c and will therefore be directed to the third or low pressure hydraulic motor and will therefore drive this motor in order to generate electricity.

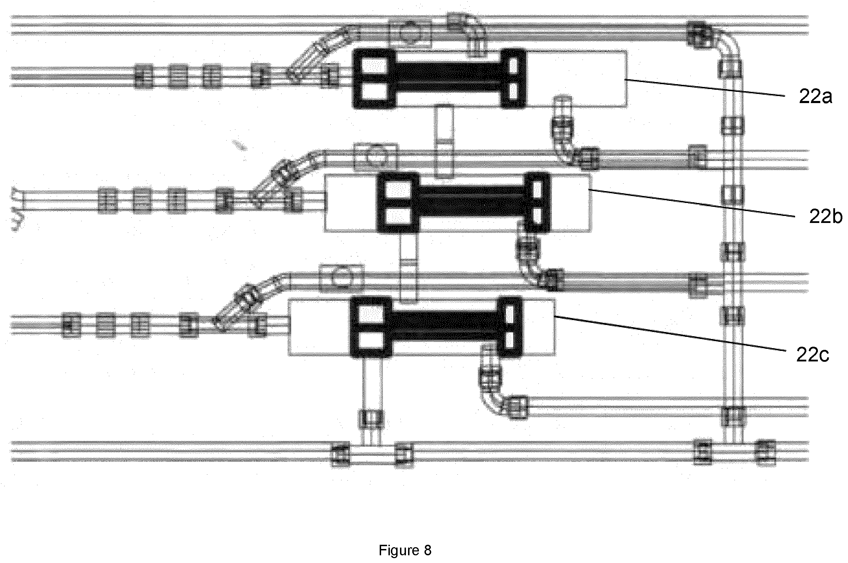

Turning then to Figure 8 there is illustrated the arrangement of spool valves 22a, 22b, 22c following the passage of a medium weight vehicle over the load sensors 14a, 14b, 14c. In this instance the medium weight vehicle will not have activated the first load sensor 14a and thus the first spool valve 22a remains in the first state. The medium weight vehicle will however have activated both the second and third load sensors 14b, 14c which will therefore have displaced each of the second and third spool valves 22b and 22c into the second state. Then as the vehicle passes over the plurality of main hydraulic rams 44 the fluid will be pumped via the supply conduit 46 through the first spool valve 22a into the second spool valve 22b. However as the second spool valve 22b is in the second state the hydraulic fluid will be pumped to the second outlet 28 and on to the second or medium pressure hydraulic motor in order to generate electricity. As the piston 30 within the second spool valve 22b has been displaced such as to occlude the first outlet 26 the hydraulic fluid does not flow into the third spool valve 22c and thus does not get pumped to the third or low pressure hydraulic motor (not shown). In this way the medium weight vehicle will only pump hydraulic fluid to the appropriate medium pressure motor. Once the hydraulic fluid has passed through the hydraulic motor (not shown) it is returned to the return conduit 18 or a hydraulic fluid header tank or the like.

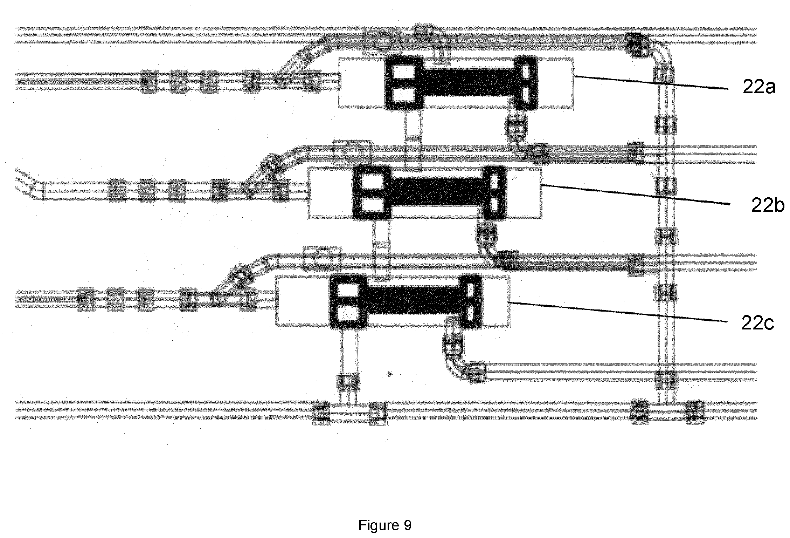

Figure 9 illustrates the arrangement of the spool valves 22a, b, c upon the passage of a heavy vehicle over the load sensors 14a, 14b, 14c. In this case all three of the spool valves 22a, 22b, 22c are actuated into the second state prior to the vehicle passing over the main hydraulic rams 44. Thus all of the fluid pumped from the main hydraulic rams 44 will be pumped into the first spool valve 22a, which has been displaced into the second state and thus all of the hydraulic fluid is diverted through the second outlet 28 and via the first motor conduit 38 to the high pressure hydraulic motor and from there back to the return conduit 18 or header tank.

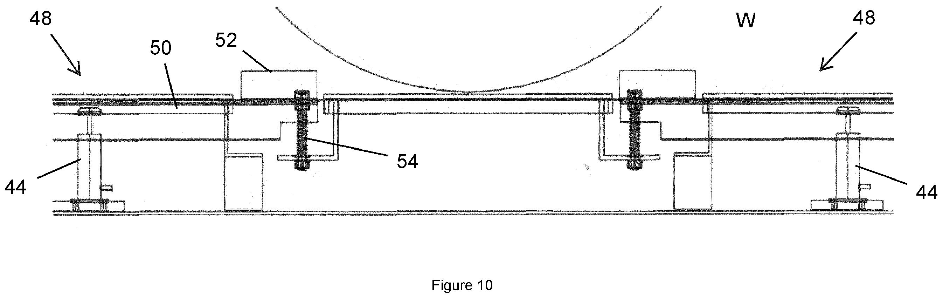

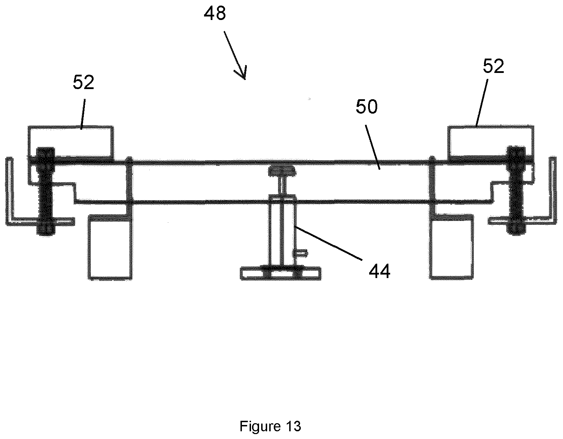

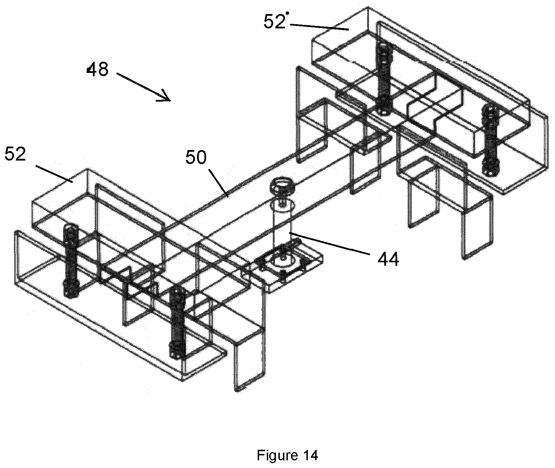

Referring to Figures 10 to 14 there is illustrated an ram assembly 48 forming an optional part of the system 10 and which is designed to achieve a double compression of each of the main hydraulic rams 44 in response to the passage of a single vehicle wheel W. In this way as a vehicle passes over each main hydraulic ram 44 both the front and rear wheels of the vehicle will pass over the ram assembly 48 and thus each main hydraulic ram 44 will be depressed four times for each front and rear wheeled vehicle that passes. The ram assemble 48 comprises a lever 50 which overlies the main hydraulic ram 44 which preferably sits beneath the mid-point of the lever 50 and effectively forms a fulcrum for the lever 50. An upstanding trigger 52 is provided at each end of the lever 50 and which preferably stands proud of the channel 12 such as to be contactable and depressible by the passage of the vehicle wheel W. A pair of spring loaded guides 54 support each end of the lever 50 and act to return the lever 50 to the neutral position shown in Figures 13 and 14.

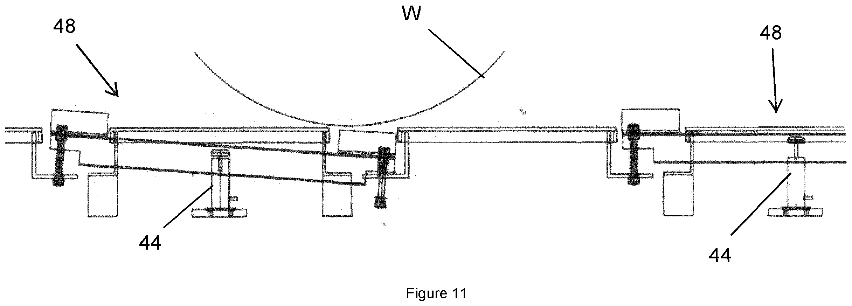

Thus in use the approaching vehicle wheel W will contact the upstream trigger 52 and the weight of the passing vehicle will force the left hand end of the lever 50 downwardly against the spring biased main hydraulic ram 44 depressing the ram and pumping the fluid therefrom. As the contact point of the vehicle wheel W passes over the mid-point of the lever 50 the spring biased guides 54 on the left hand side of the lever 50 will return the lever 50 to the neutral position, while simultaneously the main hydraulic ram 44 will return to the extended state under the action of ram spring. The continuing passage of the vehicle wheel W will then contact the downstream trigger 52 and depress the lever 50 in similar fashion in order to again depress the main hydraulic ram 44 and pump the replenished fluid therefrom. Figure 11 illustrates the vehicle wheel effecting the second depression of the main hydraulic ram 44, while Figure 10 illustrates the vehicle wheel located between adjacent pairs of main hydraulic rams 44 and associated ram assemblies 48.

Once a vehicle has passed over all of the main hydraulic rams 44 the system 10 must be reset in anticipation of the next vehicle to pass over the system 10, which may be of a different weight to the previous vehicle and thus the load sensors 14a, 14b, 14c must again be used to select which of the hydraulic motors (not shown) to be driven by the next vehicle, via the arrangement of spool valves 22a, 22b, 22c. The system 10 therefore preferably comprises a reset mechanism comprising a position sensors (not shown) which may for example take the form of a pressure pad (not shown) located in the path of the vehicle wheels and downstream of the last main hydraulic ram 44, a signal from which opens each of the release valves 36 in order to release pressure from the spool valves 22a, 22b, 22c allowing return to the first state. The release valves 36 are preferably opened for a sufficient period of time to allow the above mentioned pressure release, but are then closed again in preparation for the passage of the next vehicle. It should be understood that any other functional alternative may be employed for the position sensor (not shown), which could for example be an optical beam positioned to be broken by the passing vehicle, so as to trigger a signal to actuate the release valves 36.

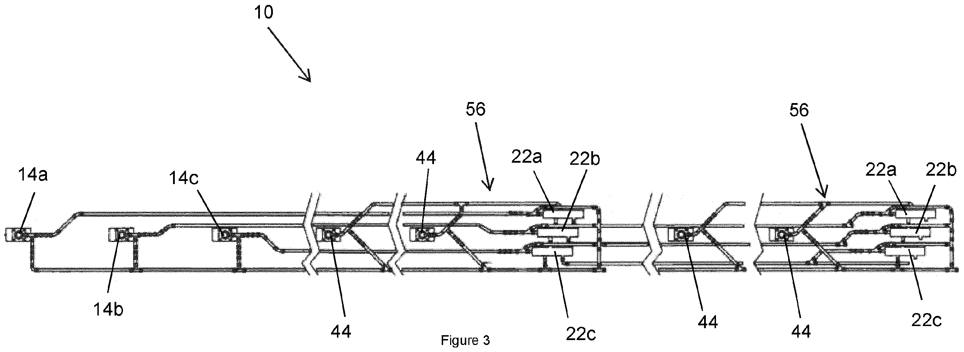

It will be appreciated that there is a limit to the number of main hydraulic rams 44 that can be employed in series as each vehicle must have cleared the last hydraulic ram 44 before the next vehicle advances onto and over the system 10. This will be dictated to a large extent by the speed of the passing vehicles and the distance separating adjacent main hydraulic rams 44. However the system 10 may be configured with multiple sets of main hydraulic rams 44, each associated with a set of the three spool valves 22a, 22b, 22c, together comprising a module 56 as illustrated in Figure 3. A plurality of these modules 56 may therefore be provided one after the other. Thus as a vehicle passes over one module 56 and the spool valves 22a, 22b, 22c are reset in preparation for the passage of the next vehicle, the first vehicle then passes on to the second module 56 and can again pump hydraulic fluid through the appropriate hydraulic motor via the replicated hydraulic components and circuitry of the second module 56. Each module 56 must then be provided with a dedicated reset mechanism including the above mentioned vehicle position sensor which temporarily opens each of the release valves 36 once a vehicle has passed over the respective module 56.

Regardless of the number of modules 56 employed, the system 10 can still be operated with only the single initial set of load sensors 14a, 14b, 14c. In order to achieve this each first motor conduit 38 branches to connect to the first spool valve 22a of the next module 56, each second motor conduit 40 branches to connect to the second spool valve 22b of the adjacent module 56 and each third motor conduit 42 branches to connect to the third spool valve 22c of the adjacent module 56. Thus as any of the spool valves 22a, 22b, 22c are actuated and fluid pumps through the respective spool valve to the respective hydraulic motor the next corresponding spool valves in the adjacent module 56 will also be displaced into the second state in anticipation of that vehicle advancing onto the second module 56. Thus each successive module 56 will be placed into the correct configuration to supply the pumped hydraulic fluid to the appropriate hydraulic motor for the one vehicle passing across each of the successive modules 56.

It will thus be appreciated that the energy generation system 10 of the present invention provides a relative simple, reliable and efficient means of generating energy, preferably electrical energy, from a readily and widely available driving source, namely the flow of vehicular traffic that is present in a large number of locations in every inhabited area of the world.

## Claims

1. An energy generation system comprising at least first and second hydraulic motors having different ratings; a main hydraulic ram (44) actuatable in response to the passage of a vehicle and connectable to the hydraulic motor; first and second load sensors (14a-c), the first load sensor (14a) having a different threshold activation pressure to the second load sensor (14b); and at least first and second flow control valves (22a-c) disposed between the ram and the first and second motor, the first flow control valve actuatable by the first load sensor (14a), and the second flow control valve (22b) actuatable by the second load sensor (14b), from a first state preventing fluid flow from the ram to the first or second motor to a second state permitting fluid flow from the ram to the first or second motor; wherein each flow control valve (22a-c) comprises an inlet (24) in fluid communication with the main hydraulic ram; a first outlet (26) in fluid communication with the first or second hydraulic motor; and a second outlet (28); the flow control valve being actuatable between the first state in which the inlet (24) is in fluid communication with the first outlet (26) and the second state in which the inlet (24) is in fluid communication with the second outlet (28); and wherein the inlet (24) of the second flow control valve is supplied from the first outlet (26) of the first flow control valve (22a).

2. An energy generation system according to claim 1 in which the load sensor is pressure actuated and has a threshold activation pressure.

3. An energy generation system according to any preceding claim comprising a plurality of the main hydraulic rams positioned in series and each in fluid communication with the at least first and second flow control valves.

4. An energy generation system according to any preceding claim in which the or each main hydraulic ram is arranged to be compressed in response to the passage of a vehicle such as to pump hydraulic fluid to the at least first and second flow control valves.

5. An energy generation system according to any preceding claim in which the or each main hydraulic ram is spring biased towards an extended state.

6. An energy generation system according to any preceding claim comprising a channel within which the or each main hydraulic ram and the at least first and second flow control valves are at least partially housed.

7. An energy generation system according to any preceding claim wherein the at least first and second flow control valves comprise a spool valve.

8. An energy generation system according to claim 7 in which each load sensor comprises a secondary hydraulic ram in fluid communication with the spool valve such that hydraulic fluid pressure generated by compression of the secondary hydraulic ram is arranged to displace the spool valve from the first to the second state.

9. An energy generation system according to any preceding claim comprising a reset mechanism actuatable by the passage of the vehicle to return each flow control valve to the first state.

10. An energy generation system according to claim 9 comprising a position sensor located downstream of the at least one main hydraulic ram with respect to the direction of travel of a vehicle.

11. An energy generation system according to claim 10 in which the reset mechanism comprises a remotely controllable release valve operable by the position sensor to release the hydraulic pressure applied by the secondary hydraulic ram to the respective spool valve such as to permit the spool valve to return to the first state.

12. An energy generation system according to any preceding claim comprising a ram assembly adapted to effect compression of the main hydraulic ram and comprising a lever reversibly rotatable about a fulcrum by the passage of a vehicle wheel such as to compress the main hydraulic ram.

13. A method for generating energy comprising the steps of:
passing a vehicle wheel over first and second pressure actuated load sensors (14a-c) having different threshold activation pressures;
actuating one of at least two flow control valves (22a-c) when a respective threshold pressure is sensed; and
pumping hydraulic fluid from at least one main hydraulic ram (44), in response to the passage of the vehicle wheel, through the first or second flow control valve (22a,b,c) to a first or second hydraulic motor to generate energy, the first and second hydraulic motors having different ratings.

## Patentansprüche

1. Energieerzeugungssystem, umfassend mindestens einen ersten und zweiten Hydraulikmotor, die unterschiedliche Leistungen aufweisen; einen Haupthydraulikzylinder (44), der als Reaktion auf das Passieren eines Fahrzeugs betätigt werden kann und mit dem Hydraulikmotor verbunden werden kann; einen ersten und zweiten Lastsensor (14a-c), wobei der erste Lastsensor (14a) einen anderen Schwellenauslösedruck aufweist als der zweite Lastsensor (14b); und mindestens ein erstes und zweites Durchflussregelventil (22a-c), die zwischen dem Zylinder und dem ersten und zweiten Motor angeordnet sind, wobei das erste Durchflussregelventil durch den ersten Lastsensor (14a) betätigt werden kann, und das zweite Durchflussregelventil (22b) durch den zweiten Lastsensor (14b) betätigt werden kann, von einem ersten Zustand, der eine Fluidströmung von dem Zylinder zum ersten oder zweiten Motor verhindert, zu einem zweiten Zustand, der eine Fluidströmung von dem Zylinder zum ersten oder zweiten Motor erlaubt; wobei jedes Durchflussregelventil (22a-c) einen Einlass (24), der mit dem Haupthydraulikzylinder in Fluidkommunikation steht; einen ersten Auslass (26), der mit dem ersten oder zweiten Hydraulikmotor in Fluidkommunikation steht; und einen zweiten Auslass (28) umfasst;
wobei das Durchflussregelventil zwischen dem ersten Zustand, in dem der Einlass (24) mit dem ersten Auslass (26) in Fluidkommunikation steht und dem zweiten Zustand betätigt werden kann, in dem der Einlass (24) mit dem zweiten Auslass (28) in Fluidkommunikation steht; und wobei der Einlass (24) des zweiten Durchflussregelventils von dem ersten Auslass (26) des ersten Durchflussregelventils (22a) versorgt wird.

2. Energieerzeugungssystem nach Anspruch 1, wobei der Lastsensor druckbetätigt ist und einen Schwellenwertauslösedruck aufweist.

3. Energieerzeugungssystem nach einem der vorhergehenden Ansprüche, umfassend eine Vielzahl der Haupthydraulikzylinder, die in Reihe positioniert sind und jeweils mit dem mindestens einen ersten und zweiten Durchflussregelventil in Fluidkommunikation stehen.

4. Energieerzeugungssystem nach einem der vorhergehenden Ansprüche, wobei der oder jeder Haupthydraulikzylinder angeordnet ist, um als Reaktion auf das Passieren eines Fahrzeugs komprimiert zu werden, um Hydraulikfluid zu dem mindestens einen ersten und zweiten Durchflussregelventil zu pumpen.

5. Energieerzeugungssystem nach einem der vorhergehenden Ansprüche, wobei der oder jeder Haupthydraulikzylinder zu einem ausgefahrenen Zustand federbelastet ist.

6. Energieerzeugungssystem nach einem der vorhergehenden Ansprüche, umfassend einen Kanal, in dem der oder jeder Haupthydraulikzylinder und das mindestens eine erste und zweite Durchflussregelventil zumindest teilweise untergebracht sind.

7. Energieerzeugungssystem nach einem der vorhergehenden Ansprüche, wobei das mindestens eine erste und zweite Durchflussregelventil ein Schieberventil umfassen.

8. Energieerzeugungssystem nach Anspruch 7, wobei jeder Lastsensor einen sekundären Hydraulikzylinder in Fluidkommunikation mit dem Schieberventil umfasst, sodass ein Hydraulikfluiddruck, der durch die Kompression des sekundären Hydraulikzylinders erzeugt wird, angeordnet ist, um das Schieberventil von dem ersten in den zweiten Zustand zu verschieben.

9. Energieerzeugungssystem nach einem der vorhergehenden Ansprüche, umfassend einen Rückstellmechanismus, der durch das Passieren des Fahrzeugs betätigt werden kann, um jedes Durchflussregelventil in den ersten Zustand zurückzubringen.

10. Energieerzeugungssystem nach Anspruch 9, umfassend einen Positionssensor, der in Bezug auf die Fahrtrichtung eines Fahrzeugs nach dem mindestens einen Haupthydraulikzylinder angeordnet ist.

11. Energieerzeugungssystem nach Anspruch 10, bei dem der Rückstellmechanismus ein fernsteuerbares Ablassventil umfasst, das durch den Positionssensor betätigt werden kann, um den durch den sekundären Hydraulikzylinder auf das jeweilige Schieberventil ausgeübten Hydraulikdruck abzulassen, damit das Schieberventil in den ersten Zustand zurückkehren kann.

12. Energieerzeugungssystem nach einem der vorhergehenden Ansprüche, umfassend eine Zylinderbaugruppe, die angepasst ist, um eine Kompression des Haupthydraulikzylinders zu bewirken und umfassend einen Hebel, der durch das Passieren eines Fahrzeugrads reversibel um einen Drehpunkt drehbar ist, um den Haupthydraulikzylinder zu komprimieren.

13. Verfahren zum Erzeugen von Energie, umfassend die folgenden Schritte:
Passieren eines Fahrzeugrads über einen ersten und zweiten druckbetätigten Lastsensor (14a-c), die unterschiedliche Schwellenwertauslösedrücke aufweisen;
Betätigen eines von mindestens zwei Durchflussregelventilen (22a-c), wenn ein jeweiliger Schwellenwertdruck erfasst wird; und
Pumpen von Hydraulikfluid von mindestens einem Haupthydraulikzylinder (44) als Reaktion auf das Passieren des Fahrzeugrads durch das erste oder zweite Durchflussregelventil (22a,b,c) zu einem ersten oder zweiten Hydraulikmotor, um Energie zu erzeugen, wobei der erste und zweite Hydraulikmotor unterschiedliche Leistungen aufweisen.

## Revendications

1. Système de production d'énergie comprenant au moins des premier et second moteurs hydrauliques ayant des puissances différentes ; un vérin hydraulique principal (44) pouvant être actionné en réponse au passage d'un véhicule et pouvant être connecté au moteur hydraulique ; des premier et second capteurs de charge (14a-c), le premier capteur de charge (14a) ayant une pression d'activation seuil différente du second capteur de charge (14b) ; et au moins des première et seconde vannes de régulation de débit (22a-c) disposées entre le vérin et les premier et le second moteur,
la première vanne de régulation de débit pouvant être actionnée par le premier capteur de charge (14a), et la seconde vanne de régulation de débit (22b) pouvant être actionnée par le second capteur de charge (14b), passant d'un premier état empêchant l'écoulement de fluide du vérin vers le premier ou le second moteur à un second état permettant l'écoulement de fluide du vérin vers le premier ou le second moteur ; dans lequel chaque vanne de régulation de débit (22a-c) comprend une entrée (24) en communication fluidique avec le vérin hydraulique principal ; une première sortie (26) en communication fluidique avec le premier ou le second moteur hydraulique ; et une seconde sortie (28) ;
la vanne de régulation de débit pouvant être actionnée entre le premier état dans lequel l'entrée (24) est en communication fluidique avec la première sortie (26) et le second état dans lequel l'entrée (24) est en communication fluidique avec la seconde sortie (28) ; et dans lequel l'entrée (24) de la seconde vanne de régulation de débit est alimentée par la première sortie (26) de la première vanne de régulation de débit (22a).

2. Système de production d'énergie selon la revendication 1, dans lequel le capteur de charge est actionné par pression et a une pression d'activation seuil.

3. Système de production d'énergie selon une quelconque revendication précédente, comprenant une pluralité de vérins hydrauliques principaux positionnés en série et chacun en communication fluidique avec les au moins première et seconde vannes de régulation de débit.

4. Système de production d'énergie selon une quelconque revendication précédente, dans lequel le ou chaque vérin hydraulique principal est agencé pour être comprimé en réponse au passage d'un véhicule de manière à pomper du fluide hydraulique vers les au moins première et seconde vannes de régulation de débit.

5. Système de production d'énergie selon une quelconque revendication précédente, dans lequel le ou chaque vérin hydraulique est sollicité par ressort vers un état étendu.

6. Système de production d'énergie selon une quelconque revendication précédente, comprenant un canal dans lequel le ou chaque vérin hydraulique principal et les au moins première et seconde vannes de régulation de débit sont au moins partiellement logés.

7. Système de production d'énergie selon une quelconque revendication précédente, dans lequel les au moins première et seconde vannes de régulation de débit comprennent une soupape à tiroir.

8. Système de production d'énergie selon la revendication 7, dans lequel chaque capteur de charge comprend un vérin hydraulique secondaire en communication fluidique avec la soupape à tiroir de sorte que la pression de fluide hydraulique générée par la compression du vérin hydraulique secondaire est agencée pour déplacer la soupape à tiroir du premier au second état.

9. Système de production d'énergie selon une quelconque revendication précédente, comprenant un mécanisme de réinitialisation pouvant être actionné par le passage du véhicule pour ramener chaque vanne de régulation de débit dans le premier état.

10. Système de production d'énergie selon la revendication 9, comprenant un capteur de position situé en aval de l'au moins un vérin hydraulique principal par rapport à la direction de déplacement d'un véhicule.

11. Système de production d'énergie selon la revendication 10, dans lequel le mécanisme de réinitialisation comprend une soupape de décharge télécommandable pouvant être actionnée par le capteur de position pour relâcher la pression hydraulique appliquée par le vérin hydraulique secondaire à la soupape à tiroir respective de manière à permettre à la soupape à tiroir de revenir dans le premier état.

12. Système de production d'énergie selon une quelconque revendication précédente, comprenant un ensemble vérin adapté pour effectuer la compression du vérin hydraulique principal et comprenant un levier pouvant tourner de manière réversible autour d'un point d'appui par le passage d'une roue de véhicule de manière à comprimer le vérin hydraulique principal.

13. Procédé de production d'énergie comprenant les étapes :
de passage d'une roue de véhicule sur des premier et second capteurs de charge actionnés par pression (14a-c) ayant des pressions d'activation seuil différentes ;
d'actionnement de l'une d'au moins deux vannes de régulation de débit (22a-c) lorsqu'une pression seuil respective est détectée ; et
de pompage d'un fluide hydraulique depuis au moins un vérin hydraulique principal (44), en réponse au passage de la roue du véhicule, jusqu'à un premier ou un second moteur hydraulique en passant par la première ou la seconde vanne de régulation de débit (22a,b,c) pour produire de l'énergie, les premier et second moteurs hydrauliques ayant des puissances différentes.
